(19) Europäisches Patentamt
European Patent Office
Office européen des brevets

(11) **EP 2 088 785 A1**

(12) **EUROPEAN PATENT APPLICATION**
published in accordance with Art. 153(4) EPC

(43) Date of publication:
**12.08.2009 Bulletin 2009/33**

(51) Int Cl.:
***H04N 7/30*** (2006.01)

(21) Application number: **07832547.9**

(22) Date of filing: **27.11.2007**

(86) International application number:
**PCT/JP2007/072822**

(87) International publication number:
**WO 2008/066025 (05.06.2008 Gazette 2008/23)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.11.2006 EP 06024537**

(71) Applicant: **Panasonic Corporation
Kadoma-shi
Osaka 571-8501 (JP)**

(72) Inventors:
• **WEDI, Thomas
63225 Langen (DE)**
• **KNICKER, Florian
63225 Langen (DE)**

(74) Representative: **Grünecker, Kinkeldey,
Stockmair & Schwanhäusser
Anwaltssozietät
Leopoldstrasse 4
80802 München (DE)**

(54) **IMAGE ENCODING APPARATUS AND IMAGE DECODING PART**

(57) The present invention has been conceived to solve the previously described problems, and provides a texture representation method without any unnatural feeling while performing data compression equivalent to a conventional data compression or more. An input signal is separated in two frequency domains. The low-frequency component is faithfully coded by a conventional image/video coding apparatus. The high-frequency component is analyzed to compute representative texture parameters. Instead of faithfully coding the high-frequency component, only the computed texture parameters are stored or transmitted to a decoding apparatus. Then, the low-frequency component is reconstructed, whereas the high-frequency component is replaced by a natural texture that has been synthesized according to the texture parameters. The reconstructed low-frequency component and the synthesized high-frequency component are merged to generate an output signal.

FIG. 1

## Description

## Technical Field

The present invention relates to a method and a corresponding apparatus for coding and decoding image data and video data, and in particular to a hybrid approach based on texture synthesis and image data representation.

## Background Art

Most conventional image and video compression methods aim at a faithful representation of the original data in terms of an objective quality measure such as the mean square error.

Data compression is achieved by means of entropy coding techniques and in case of lossy compression methods by removing sub-band information that cannot be perceived by the human observer.

For the compression of video data, a plurality of video coding standards has been developed. Such video standards are, for instance, ITU-T standards denoted with H.26x and ISO/IEC standards denoted with MPEG-x. The most up-to-date and advanced video coding standard is currently the standard denoted as H. 264/MPEG-4 AVC.

The coding approach underlying most of these standards includes the following main stages:

    (i) dividing each individual video frame into 2-dimensional blocks of pixels in order to subject each video frame to data compression at a block level;
    (ii) decorrelating spatiotemporal video information by applying a temporal prediction scheme to each block and by transforming the residual prediction error from the spatial domain into the frequency domain;
    (iii) reducing the overall amount of data by quantizing the resulting transform coefficients; and
    (iv) compressing the remaining data by entropy coding the quantized transform coefficients.

It is a particular approach of current video coding standards that the image information is transformed from the spatial domain into the frequency domain. Image compression is achieved by representing the image content by only a few frequency components. A natural image content is mostly concentrated in the coefficients of the lower frequency domain. Higher frequency parts, for which the human visual system is less sensitive anyway, can thus be removed or quantized in order to lower the amount of data to be coded.

This approach fails for images exhibiting a quasi-irregular arrangement of fine details, such as grass, leaves, gravel, waves, etc. For faithfully representing the irregularity inherent to these structures, almost all sub-bands of the image data are equally important but thwart efficient data compression. Conventional compression methods can thus compress irregular patterns only with a substantial loss of coding quality, i.e., with overt coding artifacts.

An alternative approach is pursued by methods collectively termed "texture synthesis", which aim at generating image data that is subjectively similar to a sample of a more or less irregular pattern or texture. The appealing aspect of texture synthesis is that an arbitrary amount of "texture" can be generated from the sample without artifacts such as seams or overt repetitions. Texture synthesis has thus found a wide scope of applications ranging from photo retouching to texture mapping in 3-D computer graphics.

There are also attempts to employ texture synthesis in video coding, wherein video and images are segmented into regions with salient image objects and regions containing subjectively unimportant details (for example, see Non-patent References 1 and 2).

In natural images, neighboring pixels are highly correlated. These correlations are due to a smooth variation of pixel data. Even edges cause (higher order) correlations in the image since they do not abruptly change direction on a length scale defined by the pixel size. These correlations generally reduce the entropy of the image data, a fact that is exploited by conventional image data compression techniques.

An important step in any conventional image data compression method is to find a representation of the image in terms of components that exhibit a lower degree of correlation than pixels in the spatial domain. This is usually achieved by applying an orthogonal transformation, such as a discrete cosine transformation (DCT), so as to transform the original image data into the frequency domain. Different spatial frequency components are mostly independent of each other so that the original image can be faithfully represented by selecting only the most "important" frequency components, e.g., the components with the largest amplitude, thus reducing the overall amount of image data.

This approach fails for images with fine details for two reasons. Firstly, smoothness in the variation of pixel data is lost if the characteristic length scale of the image details approaches the length scale defined by the pixel size, so that correlations between neighboring pixels are significantly reduced. Consequently, the image data contains a high amount of entropy, thwarting any entropy-based data compression algorithm. Secondly, the image spectrum flattens as the pixel data approaches white noise. Hence, there are no longer only a few "important" frequency components that could be selected for coding purposes without introducing disturbing artifacts into the reconstructed image.

In video data, time as a third dimension comes into play. Obviously, "natural" videos are characterized by a high degree of correlation between consecutive images. Conventionally, these temporal correlations are further exploited for video data compression by coding differences between consecutive images. In this context, motion compensated prediction is employed to code a translation from one image to the next and to code only the error of the predicted image.

However, this approach fails likewise with finely detailed images. Even if such an image exhibits only global motion, e.g. due to a camera pan (manipulation for changing a direction), the prediction error depends critically on the precision of the employed motion estimation. Even worse, finely detailed images, for instance leaves moving in the wind, tend to exhibit irregular local motion. In this case, motion compensation fails completely.

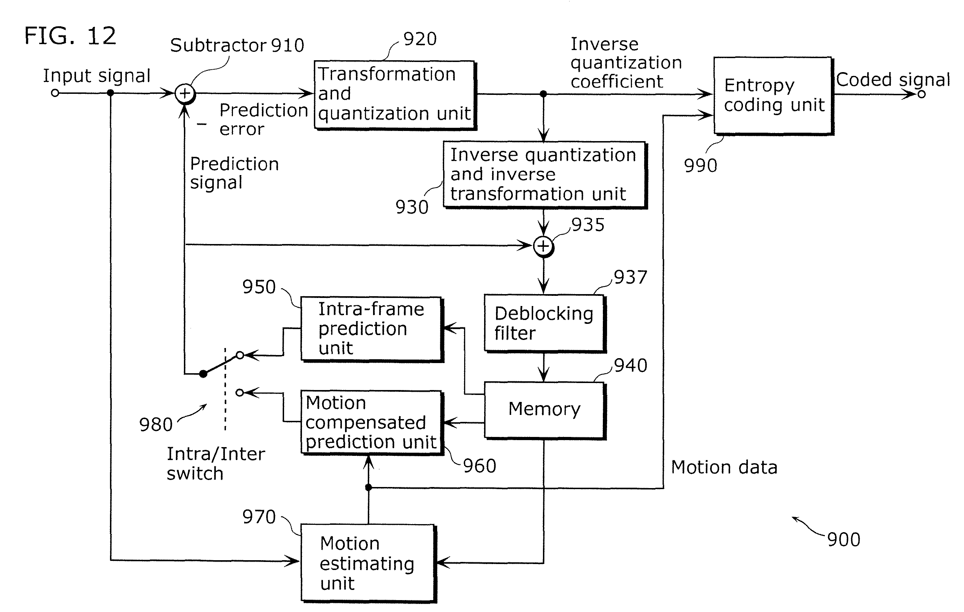

Referring to FIG. 12, an example of a conventional video coding apparatus is illustrated. A video coding apparatus 900 includes a subtractor 910 for determining differences between a current block of a video image (input signal) and a prediction signal of the current block which is based on previously coded blocks stored in a memory 940.

A transformation and quantization unit 920 transforms the resulting prediction error from the spatial domain to the frequency domain and quantizes the obtained transform coefficients. An entropy coding unit 990 entropy codes the quantized transform coefficients.

In accordance with the H.264 / AVC standard, the input image is partitioned into macro blocks. The video coding apparatus 900 employs a Differential Pulse Code Modulation (DPCM) approach which only transmits differences between blocks of an input video sequence and the prediction errors based on previously coded blocks ("the locally decoded image"). These differences are determined in subtractor 910, which receives the blocks to be coded in order to subtract the prediction signal therefrom.

The locally decoded image is provided by a decoding unit included in the video coding apparatus 900. The decoding unit performs the coding steps in reverse manner.

An inverse quantization and inverse transformation unit 930 dequantizes the quantized coefficients and applies an inverse transformation to the dequantized coefficients. In an adder 935, the decoded differences are added to the prediction signal to form the locally decoded image. Further, a deblocking filter 937 reduces blocking artifacts in the decoded image.

The type of prediction that is employed by the video coding apparatus 900 depends on whether the macro blocks are coded in "Intra" or "Inter" mode. In "Intra" mode, the video coding standard H.264/AVC uses a prediction scheme based on already coded macro blocks of the same image. In "Inter" mode, motion compensated prediction between corresponding blocks of several consecutive frames is employed in order to predict subsequent macro blocks.

Only Intra-coded images (I-type images) can be decoded without reference to any previously decoded image. The 1-type images provide error resilience for the coded video sequence. Further, entry points into bit streams of coded data are provided by the I-type images in order to enable a random access, i.e. to access 1-type images within the of coded video sequence. A switch between Intra-mode, i.e. a processing by an Intra-frame prediction unit 950, and Inter-mode, i.e. a processing by a motion compensated prediction unit 960, is controlled by an Intra/Inter switch 980.

In "Inter" mode, a macro block is predicted from corresponding blocks of previous frames by employing motion compensation. The estimation is accomplished by a motion estimating unit 970, receiving the current input signal and the locally decoded image. Motion estimation generates two-dimensional motion vectors, representing a pixel displacement between the current block and the corresponding block in previous frames. Based on the estimated motion, the motion compensated prediction unit 960 provides a prediction signal.

For both the "Intra" and the "Inter" coding mode, the differences between the current signal and the predicted signal are transformed into transform coefficients by the transformation and quantization unit 920. Generally, an orthogonal transformation such as a two-dimensional Discrete Cosine transformation (DCT) or an integer version thereof is employed.

The transform coefficients are quantized in order to reduce the amount of data that has to be coded. The step of quantization is controlled by quantization tables that specify the precision and therewith the number of bits that are used to code each frequency coefficient. Lower frequency components are usually more important for image quality than fine details so that more bits are spent for coding the low frequency components than for coding the higher ones.

After quantization, the two-dimensional array of transform coefficients has to be converted into a one-dimensional string to pass it to the entropy coder. This conversion is done by scanning the array in a predetermined sequence. The thus obtained one-dimensional sequence of quantized transform coefficients is compressed to a series of number pairs called run levels. Finally, the run-level sequence is coded with binary code words of variable length (Variable Length Code referred to as VLC). The code is optimized to assign shorter code words to most frequent run-level pairs occurring in typical video. The resulting bitstream is multiplexed with the motion information and stored on a recording medium or transmitted to a decoder.

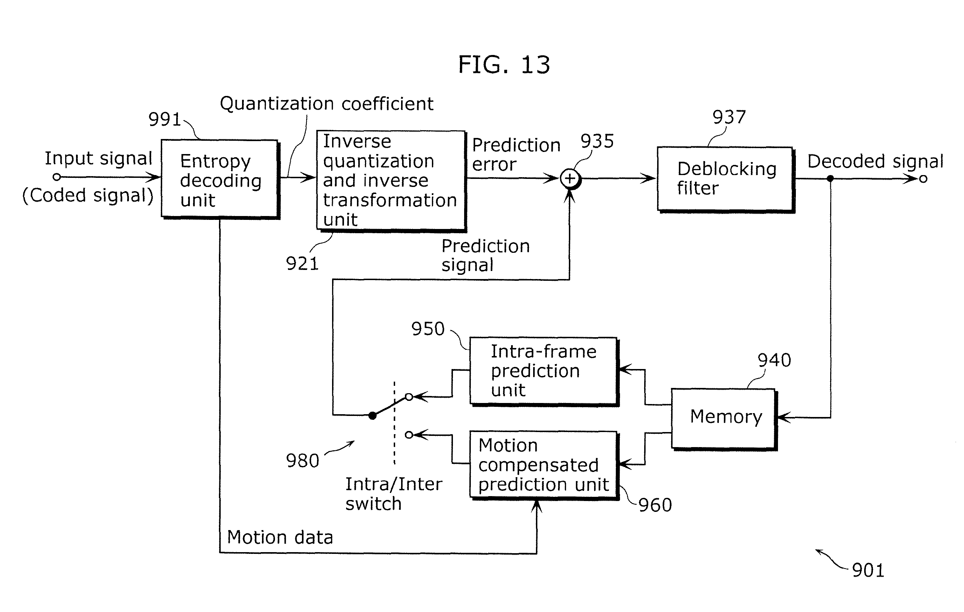

For reconstructing the coded images at the decoder, the coding process is applied in reverse manner. A schematic block diagram, illustrating the configuration of the corresponding decoding apparatus, is shown in FIG. 13.

In a decoder 901 of FIG. 13, first the entropy coding of transform coefficients and motion data are decoded in an entropy decoding unit 991. This step also involves an inverse scanning in order to convert the sequence of decoded transform coefficients into a two-dimensional block of data as it is required for the inverse transformation. The decoded block of transform coefficients is then submitted to an inverse quantization and inverse transformation unit 921, and the decoded motion data is sent to the motion compensated prediction unit 960. The decoded block of transform coefficients is then submitted to the inverse quantization and inverse transformation unit 921, and the decoded motion data is sent to the motion compensated prediction unit 960. The result of the inverse transformation includes prediction errors and is added by the adder 935 to the prediction signal stemming from the motion compensated prediction unit 960 in Inter-mode or stemming from the Intra-frame prediction unit 950 in Intra-mode. The reconstructed image may be passed through the deblocking filter 937 and the decoded signal is stored in the memory 940 to be applied to the Intra-frame prediction unit 950 and the motion compensated prediction unit 960.

Non-Patent Reference 1: A. Dumitras and B. G. Haskell, "An encoder-decoder texture replacement method with application to content-based movie coding", IEEE Trans. Circuits Syst. Video Technol., Vol. 14, pp. 825-840, 2004.
Non-Patent Reference 2: P. Ndjiki-Nya, et al., "Improved H.264 coding using texture analysis and synthesis", Proc Icip 2003, Vol. 3, pp. 849-852, 2003.

## Disclosure of Invention

## Problems that Invention is to Solve

Whereas salient image objects are coded conventionally, patterns with subjectively unimportant details are replaced by a similar texture that can be described by a small amount of texture synthesis parameters, so that only these parameters have to be coded and transmitted to the decoder.

In this manner, bandwidth-consuming description of irregular patterns is shifted to a semantic, content-oriented coding scheme that refrains from describing a shape and a position of each individual blade of grass, leaf, or pebble stone in favor of conveying the subjectively relevant information "grass", "leaves", and "gravel".

Although complex synthesis methods are used in the above coding methods, the subjective impression of the synthesized texture is often unnatural. There is thus a need for improved texture representation methods.

The present invention has been conceived to solve the problems, and has an object of providing a texture representation method without any unnatural feeling while performing data compression equivalent to a conventional data compression or more.

## Means to Solve the Problems

It is the particular approach of the present invention to separate the input signal in the frequency domain into a first sub-band signal and a second sub-band signal and to represent the first sub-band signal by means of a conventional signal representation method, whereas the second sub-band signal is replaced by a synthesized texture. The replacement texture is synthesized from texture parameters that have been adapted so that an output signal composed from the reconstructed first sub-band signal and the synthesized texture is subjectively similar to the original input signal.

According to a first aspect of the present invention, an image coding method is provided. The method includes the steps of separating an input image signal into a first image signal and a second image signal, coding the first image signal into a first bitstream, analyzing the second image signal and computing texture parameters representing a texture of the second image signal, and coding the texture parameters into a second bitstream, **characterized in that** the first image signal and second image signal represent two different sub-bands of the input image signal.

According to a further aspect of the present invention, an image coding apparatus is provided. The image coding apparatus includes a signal separating unit that separates an input image signal into a first image signal and a second image signal, a first coding unit that codes the first image signal into a first bitstream, and a second coding unit that analyzes the second image signal and computes texture parameters representing a texture of the second image signal, and codes the texture parameters into a second bitstream, **characterized in that** the first image signal and the second image signal represent two different sub-bands of the input image signal.

According to a further aspect of the present invention, an image decoding method is provided. This method includes the steps of decoding a first bitstream into a first image signal, decoding a second bitstream into texture parameters representing a texture, synthesizing a texture based on the texture parameters, and generating a second image signal from the synthesized texture, and composing an output image signal from the first image signal and the second image signal, **characterized in that** the first and second image signal represent two different sub-bands of the output image signal.

Furthermore, the present invention can be achieved not only as a video coding apparatus or a video decoding apparatus including characteristic units of the image coding apparatus or the image decoding apparatus: as a method having the characteristic units of the image coding apparatus or the image decoding apparatus as steps; and as a program causing a computer to execute such steps. It is obvious that such a program may be broadly distributed by a recording medium such as a DVD, and via a transmission medium, such as the Internet.

## Effects of the Invention

The present invention has been devised to overcome the above problems of image and video compression, in particular with respect to finely detailed images, and relates to an improved method and a corresponding apparatus for representing an image and video data. It aims on improving subjective picture quality and can be combined with video coding schemes such as H. 264/AVC.

The inventive method is a combination of conventional image representation and subjective signal enhancement. To this end, an input signal is separated into two parts. In the coding process, one part is coded conventionally and the other part is represented by parameters. At the decoder, the conventionally coded part is reconstructed and the other one is employed to enhance the signal by applying a texture synthesis algorithm.

**Brief Description of Drawings**

[FIG. 1] FIG. 1 is a schematic drawing illustrating the basic idea of the present invention.
[FIG. 2] FIG. 2 is a flow chart illustrating processing in the signal enhancement unit in accordance with an embodiment of the present invention.
[FIG. 3] FIG. 3 is a schematic drawing illustrating the basic idea of the present invention in an alternative configuration;
[FIG. 4] FIG. 4 is a schematic drawing illustrating a generalized example for applying the present invention to image and video coding.
[FIG. 5] FIG. 5 is a schematic drawing illustrating a generalized example for applying the present invention to image and video coding in an alternative configuration.
[FIG. 6] FIG. 6 is a schematic drawing illustrating a specific example for applying the present invention to the video coding apparatus.
[FIG. 7] FIG. 7 is a schematic drawing illustrating a specific example for applying the present invention to the video coding apparatus in an alternative configuration.
[FIG. 8] FIG. 8 is a schematic drawing illustrating an application example of the present invention based on steerable pyramids.
[FIG. 9] FIG. 9 is a schematic drawing illustrating an application example of the present invention based on steerable pyramids in an alternative configuration.
[FIG. 10] FIG. 10 is a block diagram in accordance with an embodiment of the present invention.
[FIG. 11] FIG. 11 is a flow chart illustrating a method for image and video coding in accordance with an embodiment of the present invention.
[FIG. 12] FIG. 12 is a block diagram illustrating a functional configuration of a conventional video coding apparatus.
[FIG. 13] FIG. 13 is a block diagram illustrating a functional configuration of a conventional video decoding apparatus.

**Numerical References**

| | |
|---|---|
| 110 | Signal separating unit |
| 110a | Sub-band decomposition unit |
| 120 | Signal enhancement unit |
| 121 | Analyzing and coding unit |
| 122 | Decoding and synthesizing unit |
| 122a | Decoding and texture synthesizing unit |
| 130 | Signal enhancement and signal composition unit |
| 131 | Analyzing and coding unit |
| 131a | Texture analysis and coding unit |
| 132 | Decoding, synthesizing, and signal composition unit |
| 132a | Decoding, texture synthesizing, and sub-band composition unit |
| 140 | Deterministic signal representation unit |
| 141 | Coding unit |
| 141a | H. 264/AVC coding unit |
| 142 | Decoding and reconstructing unit |
| 142a | H. 264/AVC decoding unit |
| 150 | Signal composition unit |
| 150a | Sub-band composition unit |
| 260 | Adder |
| 900 | Video coding apparatus |
| 910 | Subtractor |
| 920 | Transformation and quantization unit |
| 921 | Inverse quantization and inverse transformation unit |
| 930 | Inverse quantization and inverse transformation unit |
| 935 | Adder |
| 937 | Deblocking filter |
| 940 | Memory |
| 950 | Intra-frame prediction unit |
| 960 | Motion compensated prediction unit |
| 970 | Motion estimating unit |
| 980 | Intra/Inter switch |
| 990 | Entropy coding unit |
| 991 | Entropy decoding unit |

**Best Mode for Carrying Out the Invention**

An embodiment of the present invention will be described with reference to the diagrams. Although the present invention will be described using the embodiment and the diagrams, the description is intended for exemplification of the present invention. Thus, the present invention will not be limited to the description.

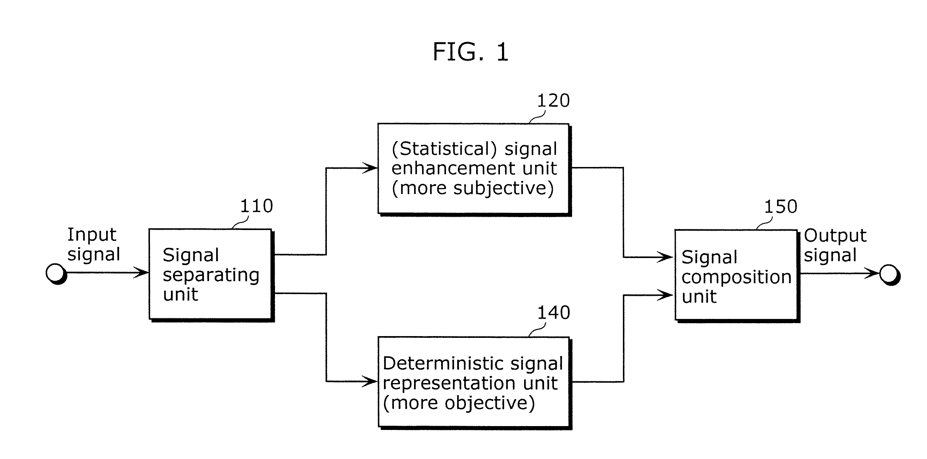

FIG. 1 is a block diagram illustrating the basic idea of the present invention. The signal that is to be represented is fed to a signal separating unit 110, which separates the input signal into two components. The first component is fed to a (deterministic) signal representation unit 140. The signal representation unit 140 applies a deterministic signal representation method such as PCM (pulse code modulation), DPCM (differential pulse code modulation), and other transform-based methods. Each of these representation methods aims at representing the signal so that an objective quality measure, such as the MSE (mean square error) of the represented signal relative to the original signal, is optimized.

On the other hand, the second component is fed to a signal enhancement unit 120, wherein the signal is analyzed so as to compute texture parameters that represent a texture that is subjectively similar to a texture included in the signal. Based on the computed texture parameters, the signal enhancement unit 120 synthesizes a texture and outputs a signal based on the synthesized texture. In general, synthesized texture is not a faithful representation of the second component signal in terms of an objective quality measure such as the MSE.

Nevertheless, the synthesized texture may provide a subjectively satisfying replacement for the original signal content in the sense that it includes the relevant information about its texture, e.g., grass, gravel, whereas irrelevant details such as forms and positions of individual blades of grass or pebble stones are neglected.

Both the texture signal and the representation of the first component signal is jointly fed to a signal composition unit 150. The signal composition unit 150 generates an output signal that includes the synthesized texture signal and the representation of the first component signal.

Preferably, the first component includes the lower frequencies of the input signal, whereas the other one of the second component includes the remaining higher frequencies. As such, those signal parts that are more important for the human visual system are faithfully represented in a conventional manner, and signal parts that are less sensitive in the human visual system, i.e., the higher frequency components, are synthesized using texture synthesis. Thus, the advantages of both approaches can be combined and the subjective picture quality, especially the authenticity of textures, can be improved significantly.

In general, the signal separating unit 110 performs a sub-band decomposition of the input signal. Therefore, the signal separating unit 110 includes a plurality of filters, especially low-pass, band-pass, and high-pass filters that separate the input signal into the lower and the higher frequency components.

Specifically, the signal separating unit 110 may perform a wavelet transformation in order to separate the input signal into its sub-bands (Alternatively, a Fourier transformation, especially a discrete cosine transformation may be performed). However, other sub-band approaches are also possible, such as approaches based on steerable pyramids.

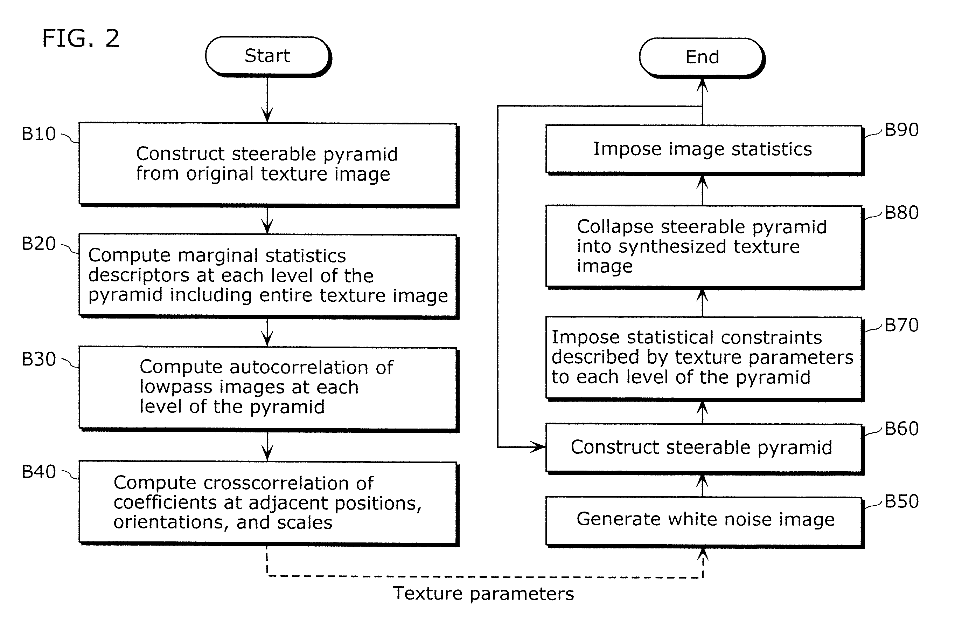

The signal enhancement unit 120 may apply any texture analysis and synthesis method known in the art. For instance, a parametric texture model based on joint statistics of complex wavelet transforms may be applied, as illustrated by the flowchart in FIG. 2.

According to this method, a steerable pyramid is constructed in step B10 by recursively decomposing the input signal to the signal enhancement unit 120 into a set of oriented sub-bands and a low-pass residual band. Statistical texture parameters are then computed in steps B20 to B40 using this decomposition. In particular, marginal statistics descriptors including parameters that describe the marginal statistics of the entire image, such as variance, skewness and kurtosis as well as minimum and maximum values of the image pixels are computed at each level of the pyramid. Moreover, autocorrelations and various cross-correlations are computed at and in-between the levels of the pyramid.

From the thus computed texture parameters, arbitrary amounts of alike looking texture can be generated. Specifically, a white noise image is generated in step B50, and is decomposed into oriented sub-bands by the steerable pyramid approach in step B60 in accordance with the decomposition performed in step B10. Each sub-band of the white noise image is further adjusted in step B70 so as to meet the statistical constraints described by the computed texture parameters. Finally, the pyramid is collapsed in step B80 and is adjusted in step B90 so that the marginal statistics of its pixel data meets statistical parameters computed in step B20 for the entire image. Steps B60 to B90 may be iterated, i.e., the generated texture may be employed as an initial value for the decomposition and adjustment process instead of the white noise image, for a predetermined number of iterations or until the synthesized texture has become sufficiently stable.

Although the operation of the signal enhancement unit 120 has been exemplified by means of a particular parametric texture model, the present invention is not restricted in this respect. Instead, any parametric texture model or even non-parametric texture models, such as sampling-based models, may be employed.

The signal composition unit 150 basically performs the inverse operation of the signal separating unit 110. Generally, the output signals of the signal enhancement unit 120 and the signal representation unit 140 may simply be added in order to generate a desired output signal. However, more-complex operations may be needed for collapsing a steerable pyramid or an inverse wavelet-transformation, depending on the mechanism that has been employed for separating the input signal into two components.

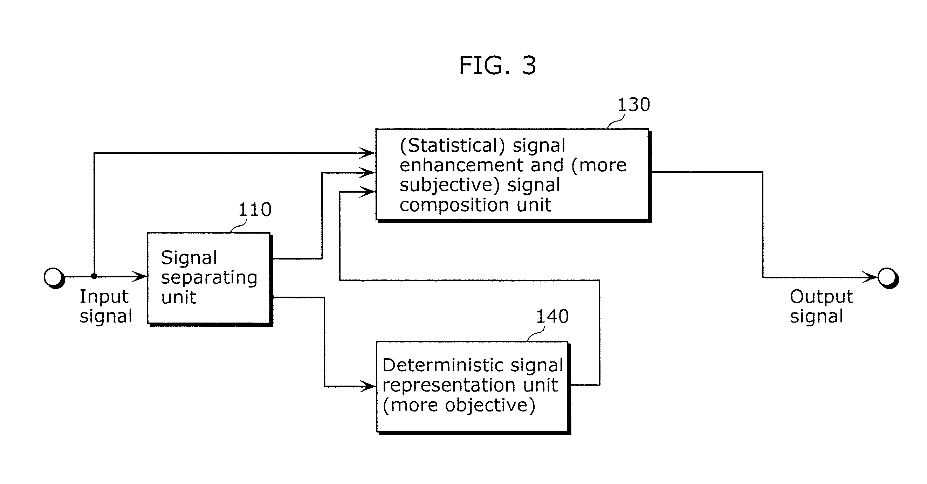

FIG. 3 illustrates an alternative configuration of the block diagram of FIG. 1. Here, the signal enhancement unit 120 and the signal composition unit 150 are merged into a signal enhancement and signal composition unit 130 which also receives an additional copy of the original input signal. Alternatively, the signal enhancement and signal composition unit 130 may also receive a copy of the first component instead of the original input signal. As it will become apparent from the following description, the same advantages can be achieved in both cases.

Due to the additional feed of the input signal to the signal enhancement and signal composition unit 130, the texture parameters may also be computed by taking the original input signal into account. In this manner, the computed texture parameters may also comprise cross-correlations between the first and the second component. These cross-correlations may describe the spatial information for the texture that is to be synthesized. In other words, for a quasi periodic texture such as a brick wall or a woven fabric, cross-correlations between the low-frequency and the high frequency components may include the phase information needed for correctly merging the synthesized texture and the reconstructed low-frequency component.

On the other hand, the synthesis of the texture may also be based on the reconstructed first component signal so as to take the information included in the low-pass component into account. In particular, the texture may be synthesized based on texture parameters that describe a statistical relation between the first and the second signal component, such as the cross-correlations mentioned above. This alternative configuration will become more important in connection with an application of the present invention to image and video coding and decoding apparatuses which will be described hereinafter.

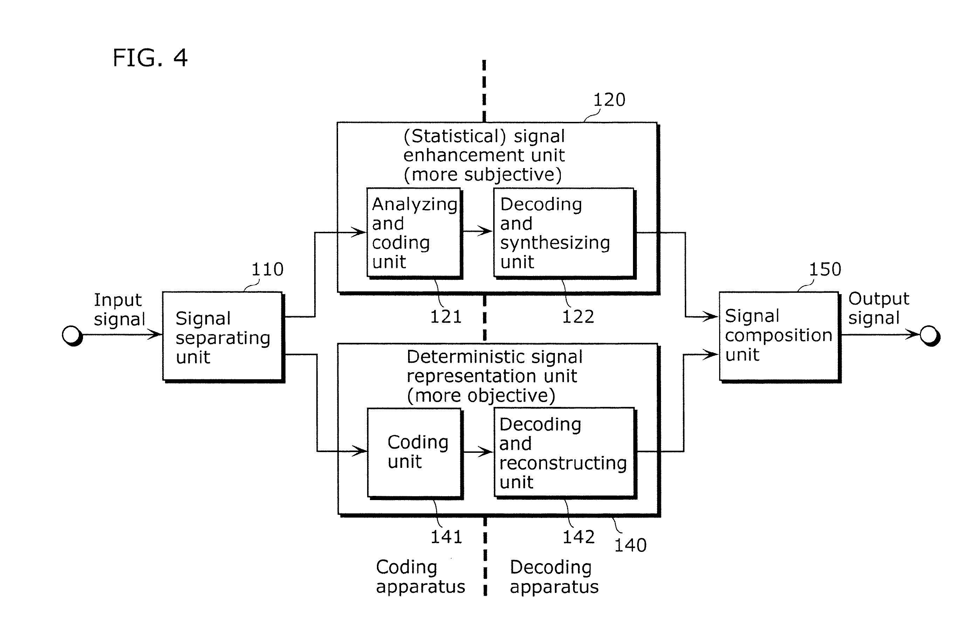

FIG. 4 illustrates a particular application of the present invention to image and video coding. The image or video signal to be coded is fed to the signal separating unit 110, where it is divided into two separate sub-bands as described above. The two sub-band components are coded independently of each other. The low-frequency component is fed to a conventional coding unit 141 and is coded into a first bitstream. The high-frequency component, on the other hand, is fed to an analyzing and coding unit 121. The analyzing and coding unit 121 computes representative texture parameters as described in connection with FIG. 1. The thus computed texture parameters are then coded into a second bitstream.

For coding texture parameters, a method similar to the coding of transform coefficients, as described above in connection with FIG. 12, may be employed. In particular, texture parameters are converted into a one-dimensional data string and passed to an entropy coder in order to be coded by a variable-length code, such as a Huffman code. Optionally, the texture parameters may also be quantized in analogy to the transform coefficients in order to reduce the amount of data to be coded.

The first and the second bitstream may be multiplexed into a single bitstream which is then outputted by a coding apparatus including the signal separating unit 110, the coding unit 141, and the analyzing and coding unit 121.

The bit streams outputted by the coding apparatus may be stored to a recording medium or transmitted over a transmission channel.

At the decoder, the received bitstream may be de-multiplexed into the first bitstream representing the low-frequency component and the second bitstream including the texture parameters. The first and the second bitstream are then received by a decoding and reconstructing unit 142 and a decoding and synthesizing unit 122, respectively. The decoding and reconstructing unit 142 decodes the first bitstream and reconstructs the low-frequency component of the original input signal. The decoding and synthesizing unit 122, on the other hand, decodes the texture parameters included in the second bitstream and synthesizes, based on the decoded texture parameters, a texture signal that mimics the high-frequency component of the original input signal. The reconstructed low-frequency component and the synthesized texture signal are fed to the signal composition unit 150 in order to be merged appropriately into the decoder's output signal.

According to the present invention, input image/video data can be compressed in a highly efficient manner since subjectively irrelevant details included in the irregular pattern of the high-frequency component are replaced by a synthesized texture, which is fully determined by a few texture parameters only. Hence, in contrast to the conventional video coding, still images and video can be transmitted at a lower bit rate or can be stored with a smaller storage capacity without compromising image quality. Most importantly, the synthesized texture is free of coding distortion.

Finally, the present invention can represent texture in a more natural and authentic manner than conventional video compression techniques based on texture synthesis, because the low-frequency component is faithfully represented rather than synthesized.

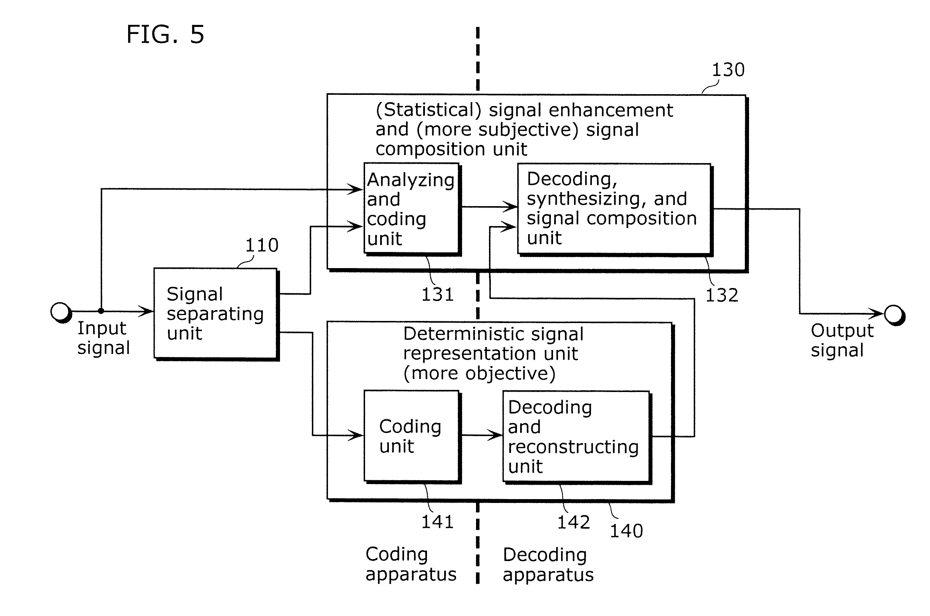

FIG. 5 illustrates an alternative configuration of the image/video coding apparatus shown in FIG. 4. In analogy to FIG. 3, the decoding and synthesizing unit 122 and the signal composition unit 150 are merged into a single decoding, synthesizing, and signal composition unit 132. Moreover, an analyzing and coding unit 131 receives an additional copy of the original input signal. In this configuration, the texture parameters may be computed again by taking the original input signal into account. In addition, the synthesis of the texture on the decoder may be based on the reconstructed first component signal so as to also take information included in the low-pass component into account. In particular, the reconstructed first component signal outputted by the decoding and reconstructing unit 142 may be used in the texture synthesis algorithm in order to obtain an output image that is visually similar to the original one.

In this manner, the coding apparatus may compute texture parameters that have cross-correlations between the first and the second components, which may then be used by a decoding apparatus to correctly obtain the spatial information, i.e. the phase, of a texture. This may be particularly important in case of images that are further partitioned in the spatial domain into separately represented regions. Disturbing artifacts like visible seams at the regions' borders can only be prevented if the textures for each region are synthesized with the correct phase relative to each other. According to the present invention, this is achieved by fixing the phase of the synthesized texture to features of the low-frequency component, for instance by employing the above mentioned cross-correlations between the high and the low-frequency components.

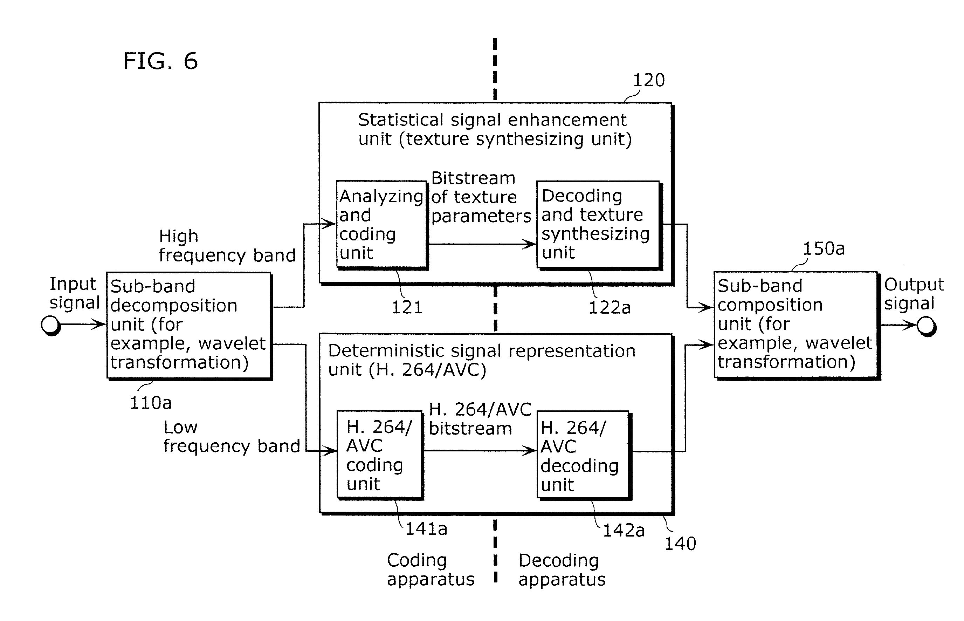

FIG. 6 illustrates a specific example of applying the present invention to video coding. The configuration shown in FIG. 6 is similar to that of FIG. 4, and a detailed explanation of the constituent elements as those of FIG. 4 denoted by the same reference numerals will be omitted.

A sub-band decomposition unit 110a separates the input video signal into a low-frequency component and a high-frequency component by means of, for instance, a wavelet-based sub-band decomposition. The low-frequency component, which is particularly important for the human visual system, is coded into the first bitstream by a conventional video coding method (for example, H.264/AVC). The high-frequency component (less important for the human visual system) is analyzed, and the resulting texture parameters are coded as described above in connection with FIG. 4.

At the decoder, the first bitstream is decoded in accordance with the corresponding conventional H. 264/AVC decoder. The second bitstream is decoded as described above in connection with FIG. 4. A sub-band composition unit 150a receives both the reconstructed low-frequency component and the synthesized high-frequency component so as to compose the final output signal, e.g., by means of a wavelet-based sub-band composition method.

Specifically, a new set of texture parameters are computed and coded for each frame of the input video signal. Alternatively, some or all of the texture parameters are transmitted to a decoder only once for several frames, so that the texture is synthesized based on at least partially identical sets of texture parameters for a plurality of frames. This is particularly useful to further reduce the amount of data that has to be transmitted or recorded in cases where intrinsic texture properties do not change from frame to frame. It is to be noted that texture movement can still be represented if cross-correlations with the low-frequency component are employed.

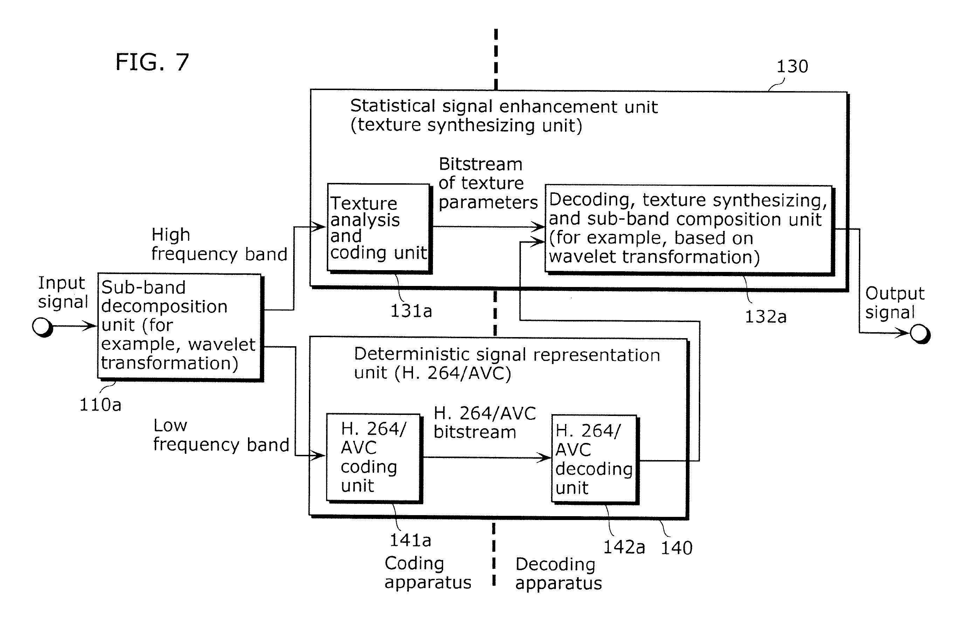

FIG. 7 illustrates an alternative configuration of the video coding apparatus shown in FIG. 6. In analogy to FIG. 5, the sub-band composition unit 150a and the decoding and texture synthesizing unit 122a are merged into a single decoding, texture synthesizing, and sub-band composition unit 132a. Moreover, a texture analysis and coding unit 131a receives an additional copy of the original input signal. In this configuration, the same advantages can be achieved as described in connection with FIG. 5.

In this configuration, the set of texture parameters may also include cross-correlations between the high and the low-frequency components. These cross-correlations can then be employed at the decoder to fix the spatial information ("phase") of the synthesized texture. Due to fixing the "phase" of the synthesized texture to features of the low-frequency component by means of cross-correlation, even time-varying textures can be represented. Moving objects, for instance, will carry their texture along themselves as the texture is fixed to the object's features represented in the low-frequency component.

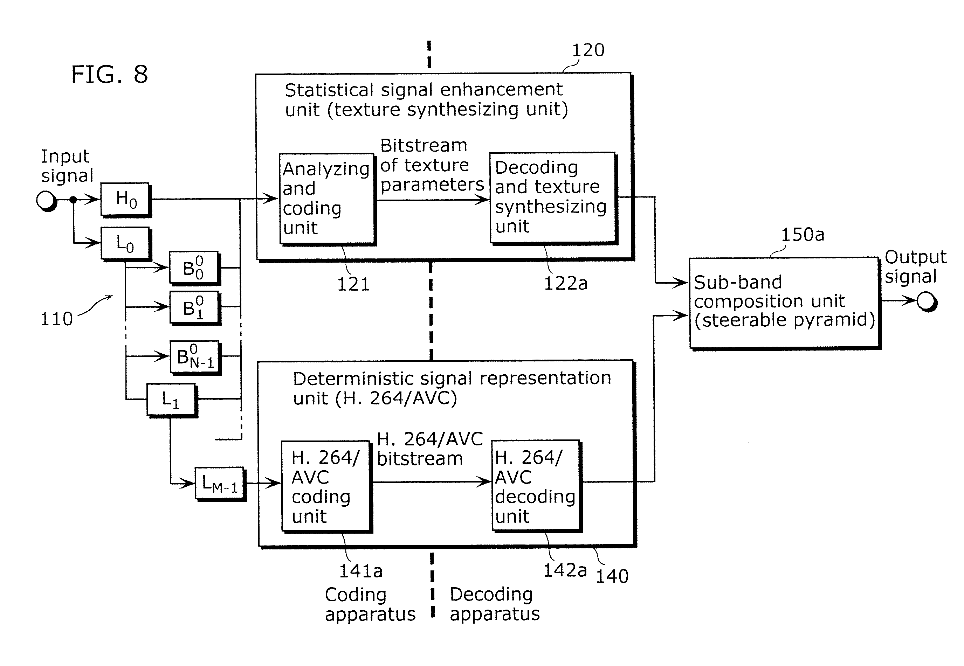

FIG. 8 illustrates another specific example of applying the present invention to the video coding apparatus. The configuration shown in FIG. 8 is similar to that of FIG. 6, and a detailed explanation of the constituent elements denoted by the same reference numerals as those of FIG. 6 will be omitted.

The configuration shown in FIG. 8 differs from the configuration of FIG. 6 in that the signal separating unit 110 is based on steerable pyramids (i.e., a recursive multi-scale sub-band decomposition scheme). At the finest scale, the input signal is separated into a low-pass image Lo and a high-pass residual signal Ho. The low-pass image is further decomposed into N oriented band-pass images $( B_0^0 \; \ldots \; B_{N-1}^0 )$ and another low-pass image $L_1$, which is downsampled by a factor of 2. This step may be repeated recursively.

On the coding apparatus, all sub-bands at the finer scales are fed to the texture analysis and coding unit 121 in order to be represented by texture parameters alone. The low-pass residual image at the coarsest scale $L_{m-1}$, on the other hand, is coded by a conventional H. 264/AVC coding unit 141a. Both the H. 264/AVC bitstream and the bitstream of texture parameters are transmitted to the decoding apparatus.

On the decoder, the texture parameters are decoded and the sub-bands at the finer scales are substituted by a texture synthesis algorithm. The H. 264/AVC bitstream is decoded by a H. 264/AVC decoder in order to obtain the low-pass residual image. The entire pyramid is collapsed in the sub-band composition unit 150a in order to generate the decoded output signal.

This approach has the particular advantage, that information of the low-frequency component is included in a video signal with only a resolution lower than the original resolution. Therefore, both the conventional coding unit 141 and the decoder 142 have to handle only a fraction of the original amount of data, which translates directly into improved performance and reduced costs.

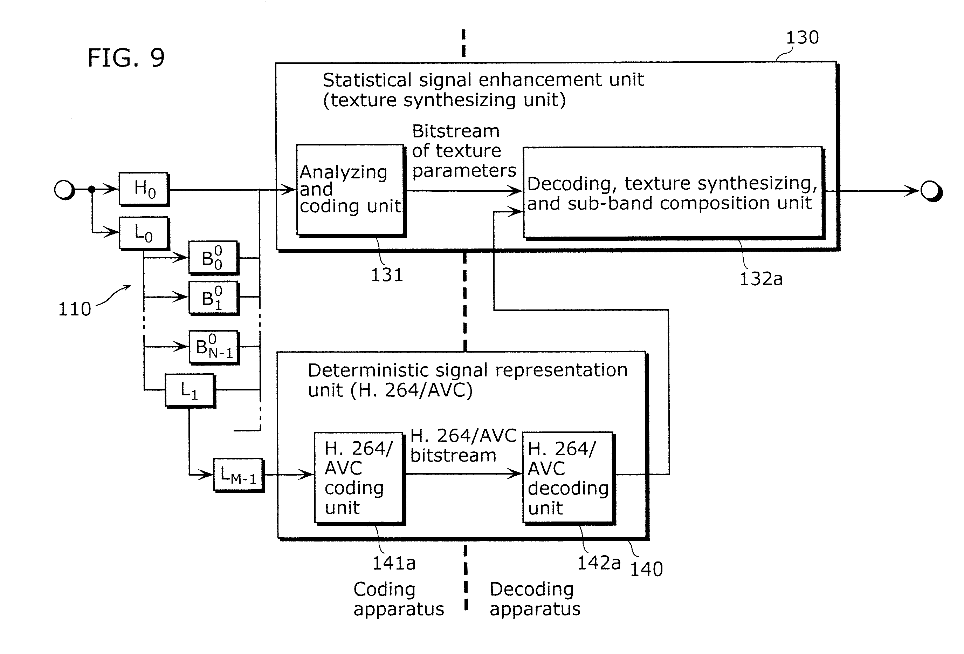

FIG. 9 illustrates an alternative configuration of the video coder shown in FIG. 8. In analogy to FIG. 5, the sub-band composition unit 150a and the decoding and texture synthesizing unit 122a are merged into the single decoding, texture synthesizing, and sub-band composition unit 132a. Moreover, the analyzing and coding unit 131 receives an additional copy of the original input signal. In this configuration, the same advantages can be achieved as described in connection with FIGS. 5 and 7.

Preferably, a decomposition based on one scale and four oriented band-pass filters (BPF) is performed. The low-pass residual image is handled by the conventional coding apparatus, whereas the complementary image component is represented by texture synthesis. Hence, signal separation can be seen as a classical frequency band separation in connection with an anti-aliasing filter.

The steerable pyramid decomposition, however, is relevant for texture synthesis in accordance with the method describe above in connection with FIG. 2. To that end, the original input image will be further decomposed at an additional scale. This leads to a decomposition into four oriented band-pass components on a first scale, another four oriented band-pass components on a second scale, one high-pass residual component, and one low-pass residual component. The band-pass components on the first scale and the high-pass residual component correspond to a statistical signal component. The band-pass components on the second scale and the low-pass residual component correspond to a deterministic signal component.

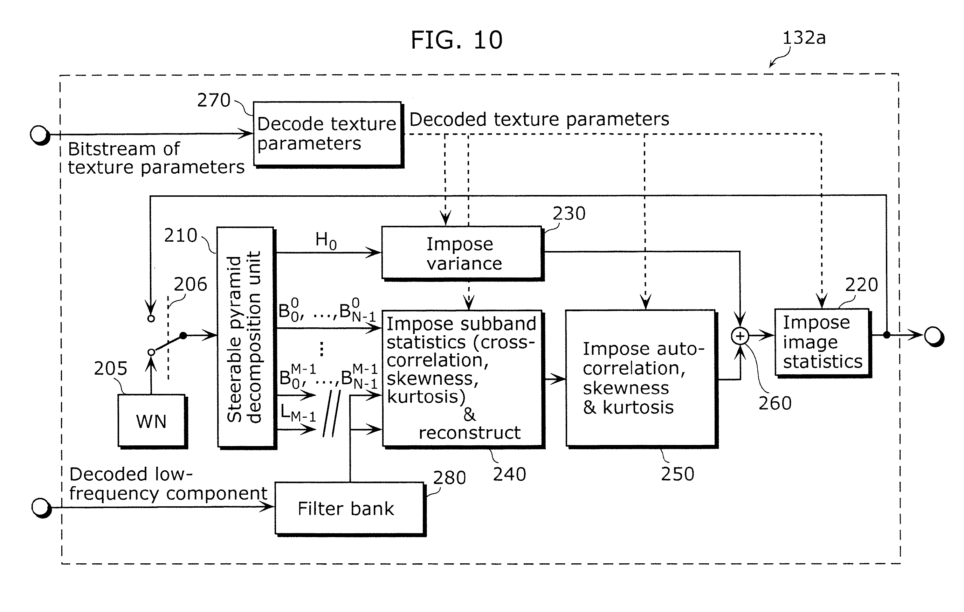

FIG. 10 is a block diagram of the decoding, texture synthesizing, and sub-band composition unit 132a according to the embodiment of the present invention.

The bitstream of coded texture parameters is fed to a decoder 270, which outputs the decoded texture parameters required for texture synthesis. In accordance with the method described in connection with FIG. 2, texture synthesis starts from a white noise image generated by a white noise generator 205. The white noise image is decomposed into a steerable pyramid by a decomposition unit 210.

The low-frequency sub-bands

$$B_0^{M-1} \quad , \quad \ldots \quad , \quad B_{N-1}^0$$

and the low-pass residual image $L_{M-1}$ are outputted by the decomposition unit 210, however, are replaced by corresponding components of the decoded low-pass component. The replacement components are generated by a filter bank 280 that is in the latter stage of a H. 264/AVC decoding unit 142a. It is to be noted that this replacement actually corresponds to the sub-band synthesis performed by the sub-band composition unit 150 in the first configuration of the present invention. The fine adjustments are then made to the pixel data distribution of the high-frequency sub-bands so as to meet the statistical constraints described by the texture parameters. In particular, the high frequency residual $H_0$ is transformed so as to meet a variance constraint by a unit 230, whereas sub-band statistics including cross-correlations, skewness, and kurtosis are imposed on the intermediate frequency sub-bands

$$B_0^0 \quad , \quad \ldots \quad , \quad B_{N-1}^0$$

from the decomposition unit 210. The decoded low frequency components

$$B_0^{M-1} \quad , \quad \ldots \quad , \quad B_{N-1}^{M-1} \quad , \quad L_{M-1}$$

that have been outputted from the H. 264/AVC decoding unit 142a, however, are not altered by a sub-band statistics unit 240. This unit further collapses the intermediate and the low frequency sub-bands of the steerable pyramid and feeds the thus reconstructed signal to a unit 250 in order to impose constraints regarding the autocorrelation, skewness, and kurtosis. An adder 260 performs the last step of collapsing the steerable pyramid by adding the outputs from the units 230 and 250. A statistics unit 220 imposes statistical constraints regarding the entire image so as to provide finally the decoder's output signal. The entire synthesis process may be iterated via a switch 206.

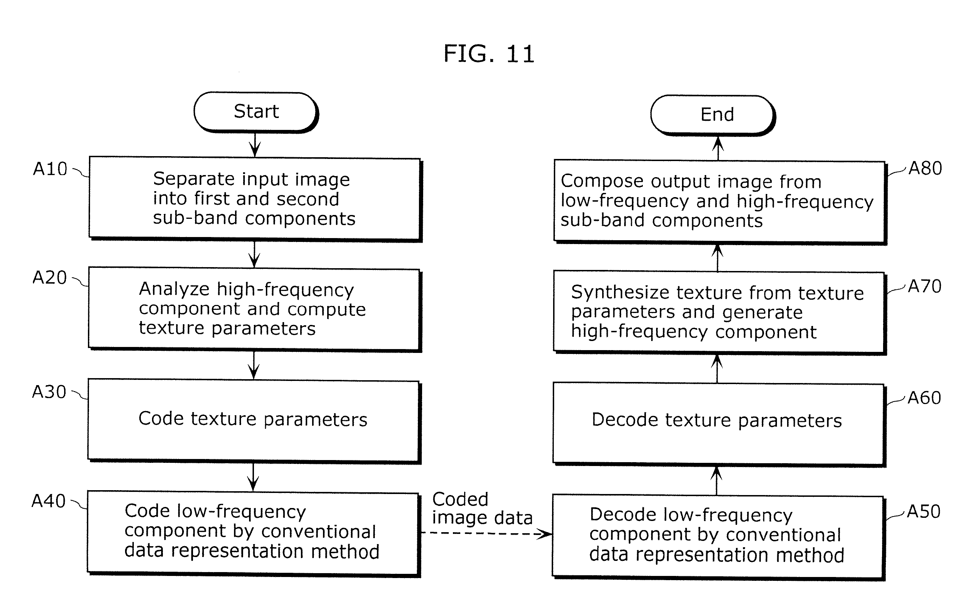

FIG. 11 is a flow chart illustrating a method for image and video coding according to the embodiment of the present invention. In step A10, an input image is separated into first and second sub-band components. The high-frequency component is analyzed in step A20 so as to compute representative texture parameters, which are then coded in step A30. In analogy to the alternative configurations shown in FIGS. 5, 7, and 9, the representative texture parameters may also be computed by taking the original input signal into account so as to compute texture parameters that describe a relation between the first and the second sub-bands (for example, cross-correlations). The low-frequency component, on the other hand, is coded by a conventional data representation method in step A40. At this point, the entire input image is coded and the coded image data may be stored in a recording medium or transmitted via a communications channel.

Upon decoding the coded image data, the low-frequency component is decoded by the conventional data representation method in step A50. The texture parameters, on the other hand, are decoded in step A60 and texture is synthesized from the decoded texture parameters so as to generate a high-frequency sub-band component in step A70. In analogy to the alternative configuration shown in FIGS. 5, 7, and 9, the texture may also be synthesized by taking the decoded low-frequency sub-band component into account so as to fix the spatial information of the synthesized texture. Finally, the output image is composed from the low-frequency and the high-frequency sub-band components in step A80.

Although the aforementioned example is described for exemplifying a case where the texture synthesis is applied to the coding process, the texture synthesis may be applied to other image processing, such as super-resolution processing. For example, when a lower-resolution image is inputted, a statistical parameter of a higher-resolution image corresponding to the lower-resolution image is obtained from a database and others, and texture of the higher-resolution image is synthesized based on the obtained statistical parameter. Here, such database can be created by learning a relationship of statistical parameters between lower-resolution images and higher-resolution images in advance.

**Industrial Applicability**

The present invention is applicable as an image coding apparatus and an image decoding apparatus. However, this invention may also be implemented as a method for coding and decoding image/video data or as a computer program product with program code stored on a computer readable medium.

**Claims**

1. An image coding apparatus that codes an input image signal representing a frame, said apparatus comprising:

   a signal separating unit configured to separate the input image signal into a first image signal in a first sub-band and a second image signal in a second sub-band;
   a first coding unit configured to code the first image signal into a first bitstream; and
   a second coding unit configured to analyze the second image signal, determine texture parameters based on a result of the analysis, and code the texture parameters into a second bitstream, the texture parameters representing a texture of the second image signal.

2. The image coding apparatus according to Claim 1, further comprising
   a signal composition unit configured to multiplex the first bitstream and the second bitstream into an output bitstream.

3. The image coding apparatus according to Claim 1, wherein said signal separating unit is configured to partition the input image into blocks each including pixels,
   said first coding unit is configured to code the partitioned blocks separately into the first bitstream, and
   said second coding unit is configured to analyze each of the partitioned blocks and code the analyzed blocks separately into the second bitstream.

4. The image coding apparatus according to Claim 1, wherein said signal separating unit further includes a first filter and a second filter which separate the input image signal into the first image signal and the second image signal, respectively.

5. The image coding apparatus according to Claim 4, wherein said first filter is a low-pass filter and said second filter is a high-pass filter.

6. The image coding apparatus according to Claim 1, wherein said signal separating unit is configured to perform a sub-band decomposition based on one of a wavelet transformation, a discrete Fourier transformation, and a steerable pyramid.

7. The image coding apparatus according to Claim 1, wherein the first image signal represents a low-frequency component of the input image signal, and the second image signal represents a high-frequency component of the input image signal.

8. The image coding apparatus according to Claim 1, wherein said second coding unit is configured to compute the texture parameters by performing a statistical analysis on the second image signal.

9. The image coding apparatus according to Claim 1, wherein said second coding unit is configured to identify information representing a representative sample of the second image signal as the texture parameters.

10. The image coding apparatus according to Claim 9, wherein said second coding unit is configured to analyze the second image signal and one of the first image signal and the input image signal, and compute statistical properties of the second image signal and the first image signal.

11. The image coding apparatus according to Claim 1, wherein the input image signal includes at least one I-frame, and said signal separating unit is configured to separate the 1-frame.

12. An image decoding apparatus that decodes a coded signal including a first bitstream and a second bitstream to generate a frame, said apparatus comprising:

    a first decoding unit configured to decode the first bitstream into a first image signal representing a first sub-band;
    a second decoding unit configured to decode the second bitstream into texture parameters representing a texture, and synthesize the texture based on the texture parameters so as to generate a second image signal from the synthesized texture, the second image signal representing a second sub-band different from the first sub-band; and
    a signal composition unit configured to compose an output image signal from the first image signal and the second image signal.

13. An image coding method for coding an input image signal representing a frame, said method comprising:

separating the input image signal into a first image signal in a first sub-band and a second image signal in a second sub-band; coding the first image signal into a first bitstream; and analyzing the second image signal, determining texture parameters based on a result of the analysis, and coding the texture parameters into a second bitstream, the texture parameters representing a texture of the second image signal.

**14.** An image decoding method for decoding a coded signal including a first bitstream and a second bitstream to generate a frame, said method comprising:

decoding the first bitstream into a first image signal representing a first sub-band; decoding the second bitstream into texture parameters representing a texture, and synthesizing the texture based on the texture parameters so as to generate a second image signal from the synthesized texture, the second image signal representing a second sub-band different from the first sub-band; and composing an output image signal from the first image signal and the second image signal.

**15.** A program causing a computer to execute the image coding method according to Claim 13 or the image decoding method according to Claim 14.

FIG. 1

FIG. 2

Start

B10 — Construct steerable pyramid
from original texture image

B20 — Compute marginal statistics
descriptors at each level of the
pyramid including entire texture image

B30 — Compute autocorrelation of
lowpass images at each
level of the pyramid

B40 — Compute crosscorrelation of
coefficients at adjacent positions,
orientations, and scales

End

Impose image statistics — B90

Collapse steerable pyramid
into synthesized texture
image — B80

Impose statistical constraints
described by texture parameters
to each level of the pyramid — B70

Construct steerable pyramid — B60

Generate white noise image — B50

Texture parameters

EP 2 088 785 A1

FIG. 3

130

(Statistical) signal
enhancement and (more
subjective) signal
composition unit

Output
signal

140

Deterministic signal
representation unit
(more objective)

110

Signal
separating
unit

Input
signal

FIG. 4

Input signal →

110 — Signal separating unit

120 — (Statistical) signal enhancement unit (more subjective)
121 — Analyzing and coding unit
122 — Decoding and synthesizing unit

140 — Deterministic signal representation unit (more objective)
141 — Coding unit
142 — Decoding and reconstructing unit

150 — Signal composition unit → Output signal

Coding apparatus

Decoding apparatus

FIG. 5

EP 2 088 785 A1

EP 2 088 785 A1

FIG. 6

Statistical signal enhancement unit (texture synthesizing unit) — 120

Analyzing and coding unit — 121

Bitstream of texture parameters

Decoding and texture synthesizing unit — 122a

Input signal

Sub-band decomposition unit (for example, wavelet transformation) — 110a

High frequency band

Low frequency band

Deterministic signal representation unit (H. 264/AVC) — 140

H. 264/AVC coding unit — 141a

H. 264/AVC bitstream

H. 264/AVC decoding unit — 142a

Sub-band composition unit (for example, wavelet transformation) — 150a

Output signal

Coding apparatus

Decoding apparatus

FIG. 7

EP 2 088 785 A1

**FIG. 8**

EP 2 088 785 A1

EP 2 088 785 A1

**FIG. 9**

Statistical signal enhancement unit
(texture synthesizing unit) — 130

Analyzing and coding unit — 131

Bitstream of texture parameters

Decoding, texture synthesizing, and sub-band composition unit — 132a

$H_0$

$L_0$

$B_0^0$

$B_1^0$

$B_{N-1}^0$

$L_1$

$L_{M-1}$

110

Deterministic signal representation unit (H. 264/AVC) — 140

H. 264/AVC coding unit — 141a

H. 264/AVC bitstream

H. 264/AVC decoding unit — 142a

Coding apparatus

Decoding apparatus

# FIG. 10

EP 2 088 785 A1

## FIG. 11

```
         ┌──────────┐                              ┌──────────┐
         │  Start   │                              │   End    │
         └────┬─────┘                              └────▲─────┘
              │                                         │
              ▼                                         │
A10 ┌────────────────────────┐        A80 ┌────────────────────────────┐
    │ Separate input image   │            │ Compose output image from  │
    │ into first and second  │            │ low-frequency and high-    │
    │ sub-band components     │            │ frequency sub-band         │
    └────────┬───────────────┘            │ components                  │
             │                            └────────────▲───────────────┘
             ▼                                         │
A20 ┌────────────────────────┐        A70 ┌────────────────────────────┐
    │ Analyze high-frequency │            │ Synthesize texture from    │
    │ component and compute  │            │ texture parameters and     │
    │ texture parameters     │            │ generate high-frequency    │
    └────────┬───────────────┘            │ component                   │
             │                            └────────────▲───────────────┘
             ▼                                         │
A30 ┌────────────────────────┐        A60 ┌────────────────────────────┐
    │                         │            │                             │
    │ Code texture parameters │            │ Decode texture parameters  │
    │                         │            │                             │
    └────────┬───────────────┘            └────────────▲───────────────┘
             │                                         │
             ▼         Coded image data                │
A40 ┌────────────────────────┐        A50 ┌────────────────────────────┐
    │ Code low-frequency     │ - - - - ─▶ │ Decode low-frequency       │
    │ component by conventional│          │ component by conventional  │
    │ data representation method│         │ data representation method │
    └────────────────────────┘            └────────────────────────────┘
```

**FIG. 12**

EP 2 088 785 A1

# FIG. 13

EP 2 088 785 A1

## INTERNATIONAL SEARCH REPORT

| International application No. |
| --- |
| PCT/JP2007/072822 |

**A. CLASSIFICATION OF SUBJECT MATTER**
*H04N7/30(2006.01)i*

According to International Patent Classification (IPC) or to both national classification and IPC

**B. FIELDS SEARCHED**

Minimum documentation searched (classification system followed by classification symbols)
H04N7/30

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | Tomokazu MURAKAMI, et al., "Total Variation Filter o Mochiita Texture Bunri Model ni yoru Gazo Fugoka Hoshiki", Proceedings of the 2006 IEICE General Conference Joho·System 2, Shadan Hojin The Institute of Electronics, Information and Communication Engineers, 08 March, 2006 (08.03.06), page 25 | 1-15 |
| A | Adriana Dumitras, Barry G. Haskell, A Texture Replacement Method at the Encoder for Bit-Rate Reduction of Compressed Video, IEEE Transactions on Circuits and Systems for Video Technology, 2003.02, Vol.13, N0.2, p.163-175 | 1-15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 December, 2007 (27.12.07) | 15 January, 2008 (15.01.08) |

| Name and mailing address of the ISA/ Japanese Patent Office | Authorized officer |
| --- | --- |
| Facsimile No. | Telephone No. |

Form PCT/ISA/210 (second sheet) (April 2007)

**INTERNATIONAL SEARCH REPORT**

International application No.

PCT/JP2007/072822

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2007-184800 A (Toshiba Corp.),<br>19 July, 2007 (19.07.07),<br>Full text; all drawings<br>& CN 101001381 A   & US 2007/0160298 A1 | 1-15 |

Form PCT/ISA/210 (continuation of second sheet) (April 2007)

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. Dumitras ; B. G. Haskell.** An encoder-decoder texture replacement method with application to content-based movie coding. *IEEE Trans. Circuits Syst. Video Technol.,* 2004, vol. 14, 825-840

- **P. Ndjiki-Nya et al.** Improved H.264 coding using texture analysis and synthesis. *Proc Icip,* 2003, vol. 3, 849-852